# EUROPEAN PATENT SPECIFICATION

(11) **EP 3 434 945 B1**
(45) Date of publication and mention of the grant of the patent: **06.01.2021**
(21) Application number: 18184031.5
(22) Date of filing: 17.07.2018
(51) Int. Cl.: F16K 1/22, F16K 1/226, F16K 1/54

(54) **BUTTERFLY VALVE**
DROSSELVENTIL
VANNE PAPILLON

(30) Priority: 28.07.2017 JP 2017146962
(43) Date of publication of application: 30.01.2019
(73) Proprietor: TGK CO., Ltd., Tokyo 193-0942 (JP)
(72) Inventor: ANDOH, Toshihiro, Tokyo, 193-0942 (JP); ARATA, Katsushi, Tokyo, 193-0942 (JP)
(74) Representative: Schröer, Gernot H.

(56) References cited:
- DE-B3- 10 325 196
- JP-A- S60 101 367
- JP-A- 2000 170 926
- JP-A- 2011 089 581

## Description

The present invention relates to a butterfly valve.

Butterfly valves have a simple structure in which a disk-shaped valve element is mounted on a shaft, which can be produced at relatively low cost. Butterfly valves are therefore often installed in water circuits of water heaters and the like and used for opening/closing or switching fluid passages. To improve the functions of butterfly valves, a structure including a variable opening to enable control with a minute opening degree has been proposed (refer, for example, to Japanese Patent Application Publication No. 2011-89581).

### Related Art List

(1) Japanese Patent Application Publication No. 2011-89581

The butterfly valve of JP 2011-89581 is intended mainly for use in a water circuit, and has a structure sufficiently resistant to water pressure. When, however, the butterfly valve is applied to a device using, in particular, high-pressure fluid such as a refrigeration cycle, for example, damage caused by erosion or abrasion from fluid may occur on the outer surface of the valve element since the fluid passes at high speed through the variable opening at a minute opening degree. This may lower the sealing performance while the valve is closed.

One purpose of an embodiment of the present invention is to prevent or reduce lowering of sealing performance while a butterfly valve, which is capable of being controlled with a minute opening degree, is closed.

The present invention relates to a motor-operated butterfly valve according to claim 1. The butterfly valve includes: a body having an inner wall defining a passage for a fluid; a shaft rotatably supported by the body; a valve element disposed in the passage in a state in which the valve element is mounted on the shaft such that the valve element turns with the shaft to adjust open and closed states or an opening degree of the passage; an actuator for driving the shaft to rotate when power is supplied; a shield wall that protrudes from an inner wall of the body and has a surface having a shape following a turning trajectory of an outer edge of the valve element; and a variable opening constituted by a cutout formed on the shield wall in a turning direction of the valve element, an opening area of the variable opening, through which flow of the fluid is permitted, varying depending on a turning angle of the valve element.

The valve element includes a flow rate adjusting part that is shifted along the surface of the shield wall to change the opening area of the variable opening, and a seal part made of an elastic material that touches and leaves the inner wall of the body to close and open the passage. The flow rate adjusting part and the seal part are located at different positions from each other.

According to the invention, the valve element of the butterfly valve includes the flow rate adjusting part and the seal part. The flow rate adjusting part adjusts the minute opening degree, and the seal part opens and closes the valve section. Since the flow rate adjusting part and the seal part are located at different positions from each other, the seal part can be separated from the variable opening at a minute opening degree, which prevents or reduces wear of the seal part. As a result, degradation in sealing performance while the valve is closed is prevented or reduced.
FIGS. 1A and 1B illustrate a structure of a butterfly valve according to a first embodiment;
FIGS. 2A and 2B illustrate a valve element and a structure around the valve element;
FIGS. 3A to 3C are external views of the valve element;
FIGS. 4A to 4G illustrate a structure of a shield member;
FIGS. 5A and 5B are partially enlarged views of shield members and surroundings as viewed in the direction of an arrow E in FIG. 1A;
FIGS. 6A and 6B illustrate states of operation of the valve element;
FIGS. 7A to 7C illustrates states of operation of the valve element;
FIG. 8 is a graph showing the relation between the angle of the valve element and the refrigerant flow rate;
FIGS. 9A and 9B illustrate a valve element and a structure around the valve element according to an example, which is not part of the present invention;
FIGS. 10A to 10C illustrate states of operation of the valve element in FIGS. 9A and 9B; and
FIGS. 11A to 11G illustrate a structure of a shield member according to a second embodiment.

Certain embodiments of the invention will now be described. The description is not intended to limit the scope of the present invention, but to exemplify the invention.

Embodiments of the present invention will now be described in detail with reference to the drawings. In the description below, for convenience of description, the positional relationship in each structure may be expressed with reference to how the structure is depicted in the drawings.

### [First Embodiment]

A butterfly valve of the present embodiment is applicable to a refrigeration cycle of an automotive air conditioner, and functions as an expansion valve or an on-off valve. The air conditioner is a so-called heat pump air conditioner including a refrigeration cycle in which a compressor, an internal condenser, an external heat exchanger, an evaporator, and an accumulator, which are not illustrated, are connected by piping. The external heat exchanger functions as an external condenser during cooling operation and functions as an external evaporator during heating operation. Examples of the refrigerant include HFC-134a and HFO-1234yf. The butterfly valve is installed at a predetermined position in the refrigeration cycle, and functions as an expansion valve for throttling and expanding the refrigerant at an upstream side of the evaporator or an on-off valve for switching a refrigerant passage to a fully-open state or a closed state.

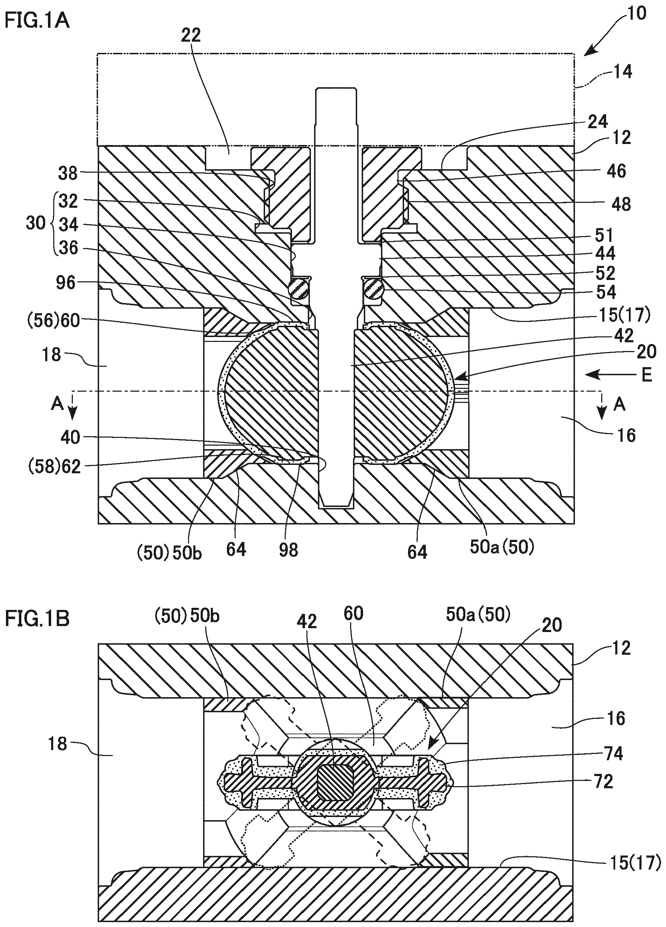

FIGS. 1A and 1B illustrate a structure of the butterfly valve according to the first embodiment. FIG. 1A is a longitudinal sectional view, and FIG. 1B is cross-sectional view along arrows A-A in FIG. 1A.

As illustrated in FIG. 1A, the butterfly valve 10 includes a body 12 containing a valve section and an actuator 14 for driving the valve section, which are assembled together. Examples of the actuator 14 include a DC motor, a stepping motor, and other motor-operated actuators.

The body 12 is produced through cutting or the like of a metal material such as an aluminum alloy or brass. A straight passage 15 passing through a lateral side of the body 12 is formed. The passage 15 is defined by an inner wall 17 of the body 12. An inlet port 16 through which the refrigerant is introduced from the upstream side is formed at one end of the passage 15, and an outlet port 18 through which the refrigerant is delivered to the downstream side is formed at the other end of the passage 15. A valve element 20 is provided in the middle of the passage 15. A first shield member 50a and a second shield member 50b are provided on the upstream side and the downstream side, respectively, of the valve element 20. These shield members have the same structure, are positioned to be symmetric with respect to the axis of the valve element 20, and adjust the opening degree of the passage 15 in cooperation with the valve element 20. Hereinafter, the shield members will be collectively referred to as "shield members 50" when the shield members need not be distinguished from each other.

The body 12 has a partition 24 separating a working chamber 22, in which the mechanism of the actuator 14 is located, from the passage 15. An insertion hole 30 is formed to extend vertically through the partition 24. The insertion hole 30 is a stepped hole having a plurality of steps with the diameter decreasing from an upper part toward a lower part. The insertion hole 30 has a large-diameter part 32, a medium-diameter part 34, and a small-diameter part 36, which are continuous in this order from the upper part. The large-diameter part 32 has an internal thread portion 38. The body 12 also has a shaft support hole 40 at a position aligned with the insertion hole 30 with the passage 15 therebetween. The shaft support hole 40 and the insertion hole 30 are formed coaxially. A shaft 42 is provided to extend through the insertion hole 30 along the axial direction. The shaft 42 constitutes a rotational shaft of the valve element 20.

The shaft 42 has a stepped columnar shape with a flange-shaped sliding portion 44 at an intermediate portion in the axial direction. The sliding portion 44 is inserted in the medium-diameter part 34 and rotatably and slidably supported by the medium-diameter part 34. The valve element 20 is mounted on a lower half part of the shaft 42. The shaft 42 passes through the valve element 20 such that the shaft 42 and the valve element 20 are coaxial, and extends across the passage 15 in the radial direction of the passage 15. A lower end part of the shaft 42 is inserted in the shaft support hole 40 and rotatably supported by the shaft support hole 40. Specifically, the shaft 42 is supported by the medium-diameter part 34 and the shaft support hole 40 such that the shaft 42 is rotatable about the axis.

A support member 46 having a stepped cylindrical shape is fixed to an upper half part of the insertion hole 30. The support member 46 has an external thread portion 48 formed on an upper half part thereof. The external thread portion 48 is engaged with the internal thread portion 38 and fastened, so that the support member 46 is fixed to the body 12. A lower end part of the support member 46 is inserted in the medium-diameter part 34. A ring-shaped sliding bearing 51 is mounted between the lower end part of the support member 46 and the sliding portion 44. The support member 46 supports the shaft 42 from above via the sliding bearing 51, and functions as a stopper that restricts upward displacement of the shaft 42.

The shaft 42 extends through the support member 46 and has an upper end part connected with a rotation mechanism (rotational shaft) of the actuator 14. A sliding bearing 52 and an O ring 54 are provided below the sliding portion 44 in the medium-diameter part 34. The O ring 54 functions as a "sealing member" that prevents leakage of fluid from the passage 15 into the working chamber 22. The sliding bearing 52 has a ring shape, similarly to the sliding bearing 51, supports the shaft 42 from below, and also functions as a backup ring for the O ring 54.

The valve element 20 is not fixed to the shaft 42 in the axial direction, but is restricted in movement along the axial direction by the inner wall 17 of the body 12. Portions of the inner wall 17 facing an upper end face and a lower end face of the valve element 20 are raised in the radial direction to form a pair of guide portions 56 and 58. End faces of the guide portions 56 and 58 in the radial direction are flat surfaces 60 and 62, respectively. The flat surfaces restrict the movement of the valve element 20 along the axial direction. The flat surfaces can be formed by cutting with a machining center, an internal broach, or the like, for example.

As illustrated in FIG. 1B, when the valve element 20 turns about 45 degrees from a fully open state illustrated with solid lines, the outer circumference of the valve element 20 comes into contact with the inner wall 17. This closes the passage 15, and provides sealing in the closed state (valve closed state). Specifically, the valve element 20 is turnable in one direction (the counterclockwise direction in FIG. 1B) and in the other direction (the clockwise direction in FIG. 1B) from the fully open state along the axis of the passage 15 (see dotted lines and broken lines in FIG. 1B). The turning of the valve element 20 is driven by the actuator 14. Note that, in the present embodiment, the valve element 20 is driven between the fully-open state (solid lines) and the closed state in one direction (dotted lines) so that the butterfly valve 10 functions as an expansion valve.

The shield members 50 have a stepped cylindrical shape, and are mounted in the body 12 such that the shield members 50 are fitted along the inner wall 17. Upstream end faces and downstream end faces of the guide portions 56 and 58 are tapered. Outer surfaces of the shield members 50 have tapered faces 64 with shapes complementary to those of the upstream end faces and downstream end faces of the guide portions 56 and 58. The first shield member 50a is inserted into the passage 15 from the inlet port 16 side, and set at a predetermined position in such a manner that the tapered faces 64 are stopped by the upstream end faces of the guide portions. Similarly, the second shield member 50b is inserted into the passage 15 from the outlet port 18 side, and set at a predetermined position in such a manner that the tapered faces 64 are stopped by the downstream end face of the guide portions. Details of the structures of the shield members 50 will be described later.

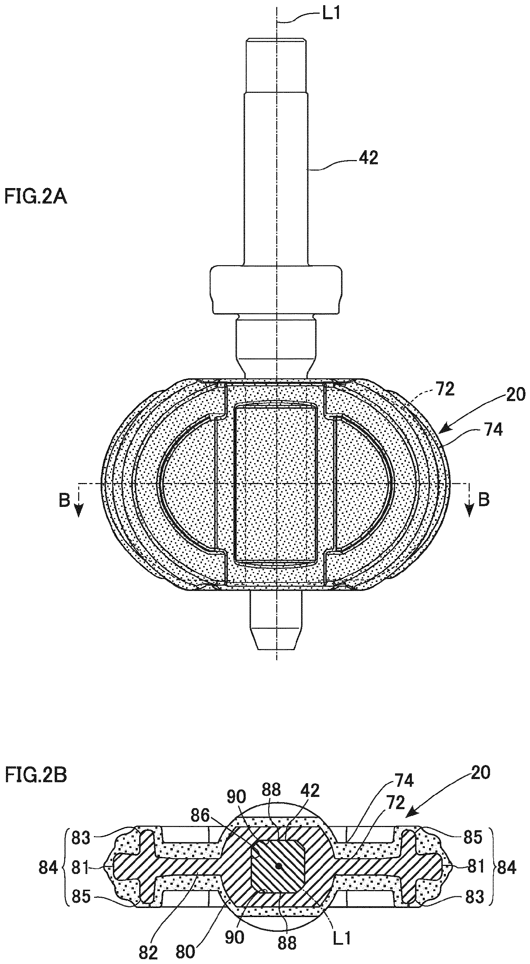

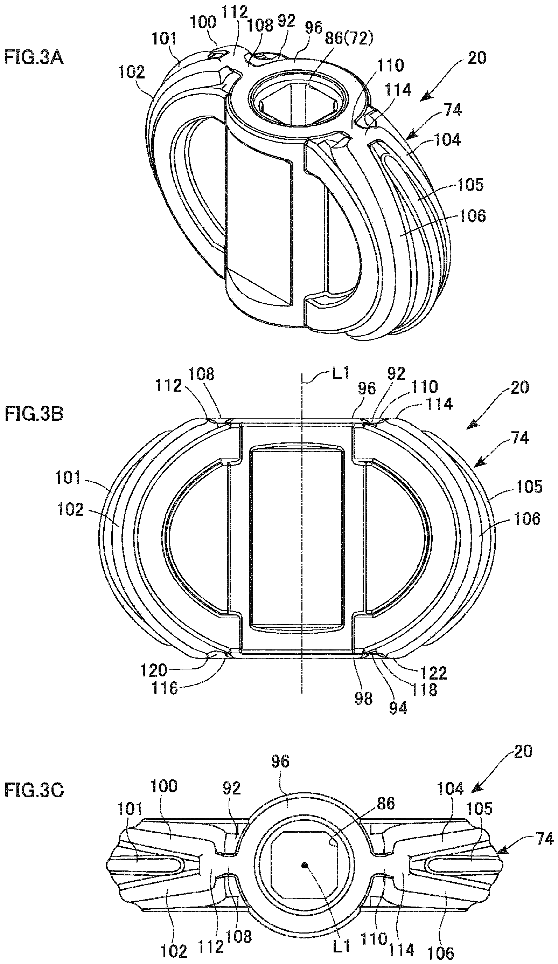

Next, the structure of the valve element 20 will be described in detail. FIGS. 2A and 2B illustrate the valve element 20 and a structure around the valve element 20. FIG. 2A is a front view illustrating a structure of connection between the valve element 20 and the shaft 42, and FIG. 2B is a cross-sectional view along arrows B-B in FIG. 2A. FIGS. 3A to 3C illustrate external views of the valve element 20. FIG. 3A is a perspective view, FIG. 3B is a front view, and FIG. 3C is a plan view.

As illustrated in FIGS. 2A and 2B, the valve element 20 includes a metal plate 72 and an elastic member 74 covering an outer surface of the plate 72, and has a symmetric structure with respect to an axis L1. The plate 72 has an oval shape in front view, and includes a cylindrical base 80 through which the shaft 42 extends, plate-shaped valve element body parts 82 extending radially outward from the base 80, and seal support parts 84 formed along an outer circumference of the valve element body parts 82. The base 80 has a mounting hole 86 through which the shaft 42 is inserted. The seal support parts 84 each have a trifurcated shape in cross section, and each include a first support part 81 extending in the extending direction of the valve element body part 82, a second support part 83 extending in one turning direction of the valve element 20 from the valve element body part 82, and a third support part 85 extending in the other turning direction of the valve element 20 from the valve element body part 82. The second support part 83 and the third support part 85 extend in directions opposite to each other in the cross section of the valve element body part 82 along the radial direction, and the respective angles between the first support part 81 and the second and third support parts 83 and 85 are about 90 degrees.

In the process of manufacturing the valve element 20, the elastic member 74 (a corrosion-resistant plastic material) is baked onto the plate 72. In the present embodiment, rubber is used for the elastic member 74, and the rubber and the plate 72 are subjected to vulcanization adhesion. In this manner, the elastic member 74 is stably fixed to the plate 72 in close contact with the plate 72.

The shaft 42 has a stepped columnar shape as a whole, but is subjected to so-called D-cuts (D-shaped cuts) at a part that is inserted through the valve element 20. Thus, the shaft 42 has a pair of flat surfaces formed at the part inserted in the mounting hole 86, which constitute rotational force transmitting surfaces 88 for transmitting the rotational force of the actuator 14.

An inner wall surface of the base 80 has a pair of pressure receiving surfaces 90 respectively in contact with the pair of rotational force transmitting surfaces 88. When the actuator 14 drives the shaft 42 to rotate the shaft 42, the rotational force transmitting surfaces 88 press the pressure receiving surfaces 90 to apply rotational torque to the plate 72. The valve element 20 turns in a direction associated with the rotating direction of the actuator 14 to control the open/closed state of the passage 15.

As illustrated in FIGS. 3A to 3C, the valve element 20 is vertically and horizontally symmetric in plan view. An upper end face and a lower end face of the elastic member 74 are flat surfaces 92 and 94 perpendicular to the axis and parallel to each other. An annular bead 96 having a circular shape is formed to protrude from the flat surface 92 and surround an upper end opening of the mounting hole 86. The annular bead 96 functions as a "first annular seal part" coaxially surrounding an opening of the insertion hole 30 and being in close contact with the flat surface 60, to block flow of refrigerant to the inside of the valve element 20 (see FIG. 1A). An annular bead 98 having a circular shape is formed to protrude from the flat surface 94 and surround a lower end opening of the mounting hole 86. The annular bead 98 functions as a "second annular seal part" coaxially surrounding an opening of the shaft support hole 40 and being in close contact with the flat surface 62, to block flow of refrigerant to the inside of the valve element 20 (see FIG. 1A).

In addition, beads 100 to 106 each having an arc shape along the outer circumferential surface of the elastic member 74 are formed to protrude from the outer circumferential surface. The beads 100, 101, and 102 are formed on one side of the valve element 20 with respect to the axis L1, and the beads 104, 105, and 106 are formed on the other side of the valve element 20. In addition, a pair of straight beads 108 and 110 are formed on an upper surface of the elastic member 74 in such a manner as to extend radially outward from the annular bead 96. Furthermore, arc-shaped beads 112 and 114 are formed to orthogonally intersect the ends of the straight beads 108 and 110. An upper end of the bead 100 is continuous with one end of the arc-shaped bead 112, and an upper end of the bead 102 is continuous with the other end of the arc-shaped bead 112. An upper end of the bead 104 is continuous with one end of the arc-shaped bead 114, and an upper end of the bead 106 is continuous with the other end of the arc-shaped bead 114.

Similarly, a pair of straight beads 116 and 118 are formed on a lower surface of the elastic member 74 in such a manner as to extend radially outward from the annular bead 98. Furthermore, arc-shaped beads 120 and 122 are formed to orthogonally intersect the ends of the straight beads 116 and 118. A lower end of the bead 100 is continuous with one end of the arc-shaped bead 120, and a lower end of the bead 102 is continuous with the other end of the arc-shaped bead 120. A lower end of the bead 104 is continuous with one end of the arc-shaped bead 122, and a lower end of the bead 106 is continuous with the other end of the arc-shaped bead 122.

The arc-shaped beads 112 and 114 and the annular bead 96 are concentric. Similarly, the arc-shaped beads 120 and 122 and the annular bead 98 are concentric. Note that the term "concentric" used herein means that the arc-shaped beads preferably have circular arc shapes, but may alternatively have straight shapes (shapes extending in a tangential direction of a concentric circle of an annular seal part) when the arc-shaped beads are short as illustrated. Such straight shapes can be virtually included in the concept of "concentric."

The annular bead 96, the straight beads 108 and 110, and the arc-shaped beads 112 and 114 are in close contact with the flat surface 60 of the passage 15 substantially at the same squeeze rate whether the valve section is open or closed. The arc-shaped beads 112 and 114 are in contact with the flat surface 60 at outermost positions of the elastic member 74 in the radial direction from the axis L1. Similarly, the annular bead 98, the straight beads 116 and 118, and the arc-shaped beads 120 and 122 are also in close contact with the flat surface 62 of the passage 15 at substantially the same squeeze rate whether the valve section is open or closed. The arc-shaped beads 120 and 122 are in contact with the flat surface 62 at outermost positions of the elastic member 74 in the radial direction from the axis L1.

The beads 102 and 104 function as "first seal parts." When the valve element 20 turns in one direction, the beads 102 and 104 come into contact with the inner wall 17 to close the passage 15 (a first valve) (see dotted lines in FIG. 1B). When the first valve is closed, the beads 102 and 104 come into close contact with the inner wall 17. At this point, the beads 102 and 104 are strongly compressed against the inner wall 17, which provides sufficient sealing performance. Specifically, a continuous sealing structure as follows is achieved: the annular bead 96 → the straight bead 108 → the arc-shaped bead 112 → the bead 102 → the arc-shaped bead 120 → the straight bead 116 → the annular bead 98 → the straight bead 118 → the arc-shaped bead 122 → the bead 104 → the arc-shaped bead 114 → the straight bead 110 → the annular bead 96. This reliably blocks flow of refrigerant through the first valve. At this point, the beads 100 and 106 are not in contact with the inner wall 17.

In contrast, the beads 100 and 106 function as "second seal parts" that touches and leaves the inner wall 17 to close and open the passage 15 (a second valve) (see broken lines in FIG. 1B). When the second valve is closed, the beads 100 and 106 come into close contact with the inner wall 17. At this point, the beads 100 and 106 are strongly compressed against the inner wall 17, which provides sufficient sealing performance. Specifically, a continuous sealing structure as follows is achieved: the annular bead 96 → the straight bead 108 → the arc-shaped bead 112 → the bead 100 → the arc-shaped bead 120 → the straight bead 116 → the annular bead 98 → the straight bead 118 → the arc-shaped bead 122 → the bead 106 → the arc-shaped bead 114 → the straight bead 110 → the annular bead 96. This reliably blocks flow of refrigerant through the second valve. At this point, the beads 102 and 104 are not in contact with the inner wall 17 (see the broken lines in FIG. 1B).

The beads 101 and 105 are arranged along the outermost circumference of valve element 20, and function as "flow rate adjusting parts" that adjusts a minute opening degree of the valve section in cooperation with the shield members 50 (see FIG. 3C). This allows the butterfly valve 10 to function as an expansion valve. In contrast, the first seal parts (the beads 102 and 104) and the second seal parts (the beads 100 and 106) are arranged at positions shifted from the outermost circumference of the valve element 20.

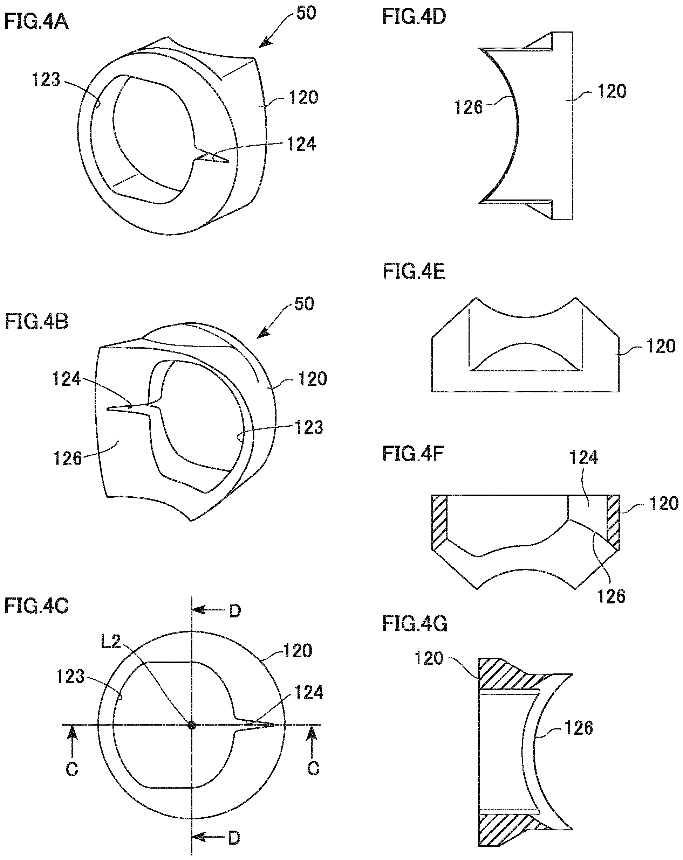

FIGS. 4A to 4G illustrate the structure of a shield member 50. FIG. 4A is a perspective view as viewed from the front, and FIG. 4B is a perspective view as viewed from the back. FIG. 4C is a front view, FIG. 4D is a left side view, and FIG. 4E is a plan view. FIG. 4F is a cross-sectional view along arrows C-C in FIG. 4C, and FIG. 4G is a cross-sectional view along arrows D-D in FIG. 4C.

As illustrated in FIGS. 4A and 4C, the shield member 50 has a substantially cylindrical shield body 120. The shield body 120 has an oval opening 123 having the center shifted leftward from the axis L2. Note that the axis L2 coincides with the axis of the passage 15 when the shield member 50 is positioned in the passage 15. The shield body 120 protrudes inward in the radial direction from the inner wall 17, and functions as a "shield wall" that partially blocks the flow of the refrigerant in the passage 15. A slit 124 extending in parallel with the axis L2 is formed on a right inner wall of the shield body 120.

As illustrated in FIGS. 4B, and 4D to 4G, the back face of the shield body 120 is a concave surface (concave spherical surface) that is a surface 126 facing the valve element 20. When the shield member 50 is positioned in the passage 15, the surface 126 has a shape following the turning trajectory of the outer edge of the valve element 20.

As illustrated in FIGS. 4A to 4C and 4F, the slit 124 is a cutout having a predetermined depth from the inner edge of the shield body 120 (the opening 123), that is the protruding edge of the shield wall, in the turning direction of the valve element 20. The slit 124 has a shape with a V-shaped cross section and with the opening width increasing toward the inner edge of the shield body 120. The slit 124 functions as a "variable opening" whose opening area through which flow of the refrigerant is permitted varies depending on the turning angle of the valve element 20.

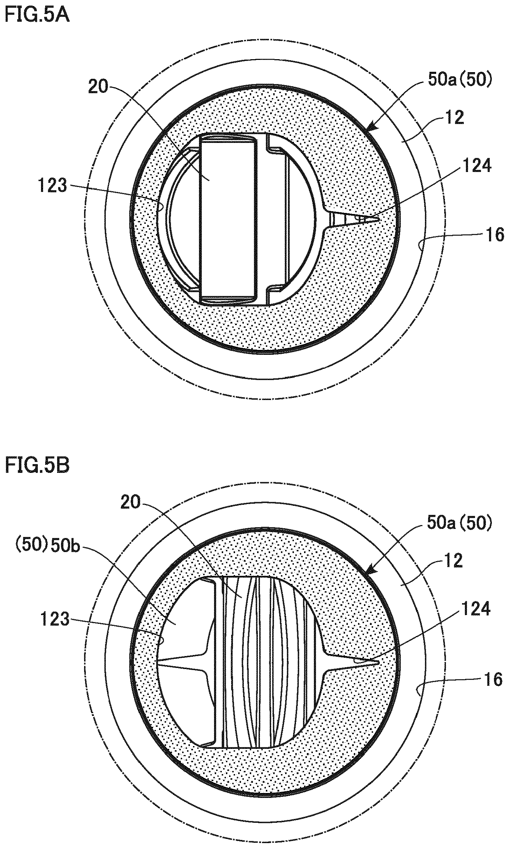

FIGS. 5A and 5B are partially enlarged views of the shield members 50 and surroundings as viewed in the direction of an arrow E in FIG. 1A. FIG. 5A illustrates a closed state, and FIG. 5B illustrates a fully-open state.

In the closed state, as illustrated in FIG. 5A, the valve element 20 fully closes the passage 15, and the flow of the refrigerant introduced through the inlet port 16 is thus blocked. In contrast, in the open state, as illustrated in FIG. 5B, the refrigerant passes through both of the first shield member 50a and the second shield member 50b and is delivered to the downstream side.

Next, details of a sealing method and a flow rate controlling method in the present embodiment will be described.

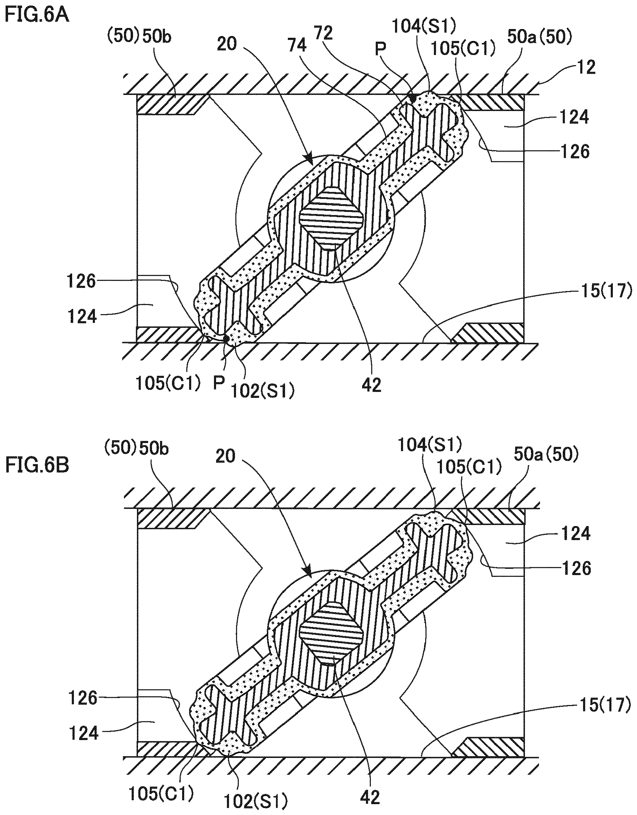

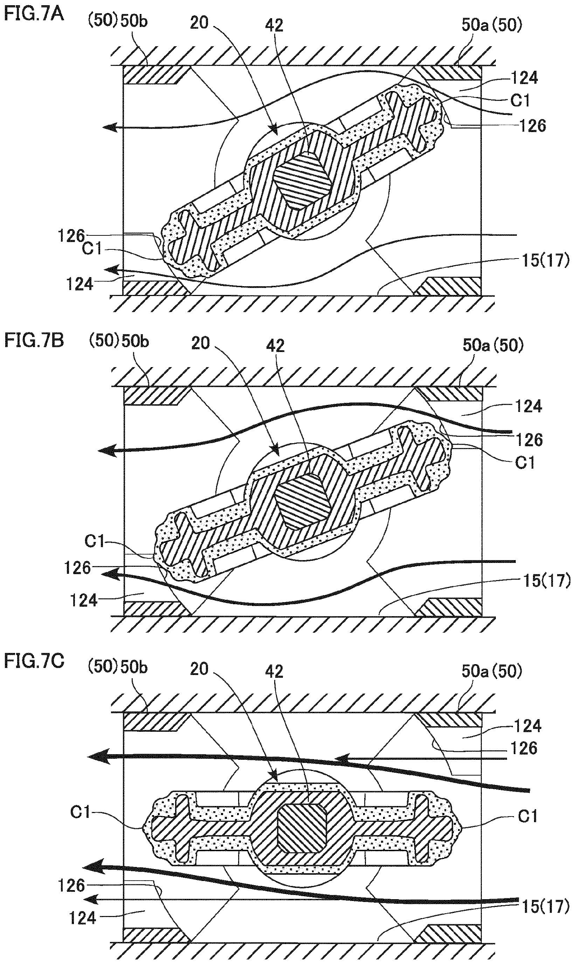

FIGS. 6A, 6B, and 7A to 7C illustrate states of operation of the valve element 20, and correspond to partially enlarged views of FIG. 1B. FIGS. 6A and 6B illustrate substantially closed states. FIG. 6A illustrates the fully closed state (sealed state), and FIG. 6B illustrates an opening start state. FIGS. 7A to 7C illustrates open states. FIGS. 7A to 7B illustrate flow rate controlling states, and FIG. 7C illustrates the fully open state.

In the fully closed state, as illustrated in FIG. 6A, seal parts S1 (the beads 102 and 104) of the valve element 20 are strongly compressed against and closely adhered to the inner wall 17, which provides sufficient sealing performance. Thus, the plate 72 has a particular shape (the trifurcated shape as described above in the present embodiment) that narrows a gap between the plate 72 and the inner wall 17 in the closed state on a lower-pressure side of the seal center of each seal part S1. Note that the seal parts S1 are parts of the elastic member 74 that are pressed against the inner wall 17 and elastically deformed (squeezed) while the valve is closed. The "seal center" refers to a portion of each seal part S1 at which the highest sealing surface pressure is generated.

Thus, when the first valve is closed and the pressure on the downstream side of the valve element 20 becomes low, narrow regions P are formed on the low-pressure sides of the seal centers of the seal parts S1. The gaps of the narrow regions P act as resistance that restricts displacement of the seal parts S1. At this point, the seal parts S1 operate to be pressed into the gaps against the resistance, which increases the surface pressures of the seal parts S1 and allows the seal parts S1 to exhibit self-sealing properties. This improves the sealing performance. In addition, since the seal parts S1 are constituted by beads, the squeeze rate of the elastic member 74 while the valve is closed can be minimized, and the shut-off torque of the valve element 20 can be reduced to a low value.

Note that, in this fully-closed state, flow rate adjusting parts C1 (beads 101 and 105) of the valve element 20 are in contact with the surfaces 126 of the shield members 50 outside of the slits 124. The flow rate adjusting parts C1, however, are not substantially deformed and do not have sealing performance, unlike the seal parts S1. In a modification, predetermined clearances may be formed between the flow rate adjusting parts C1 and the surfaces 126.

As illustrated in FIG. 6B, when the valve element 20 starts a valve opening operation, the seal parts S1 leave the inner wall 17, and the flow rate adjusting parts C1 reach base ends of the slits 124. As illustrated in FIGS. 7A and 7B, micro flow rate control is performed while the flow rate adjusting parts C1 face the slits 124. Specifically, portions of the slits 124 closer to the inner wall 17 than the flow rate adjusting parts C1 are open, through which the refrigerant passes. As the valve element 20 turns in the clockwise direction in FIGS. 7A and 7B, the opening areas of the slits 124 increases. In the present embodiment, as illustrated in FIGS. 4A to 4C, the opening widths of the slits 124 increase toward the inner sides in the radial direction of the shield members 50. Thus, the minute opening degree of the valve section also becomes larger as the flow rate adjusting parts C1 are shifted inward in the radial direction of the shield members 50. In the present embodiment, the butterfly valve 10 functions as an expansion valve while the flow rate adjusting parts C1 are shifted facing the slits 124.

As the flow rate adjusting parts C1 leave the slits 124, the increase rate of the valve opening degree becomes larger. As illustrated in FIG. 7C, when the valve element 20 is parallel to the passage 15, which is a fully-open state, the refrigerant flow rate is highest. This state corresponds to a valve open state when the butterfly valve 10 functions as an on-off valve.

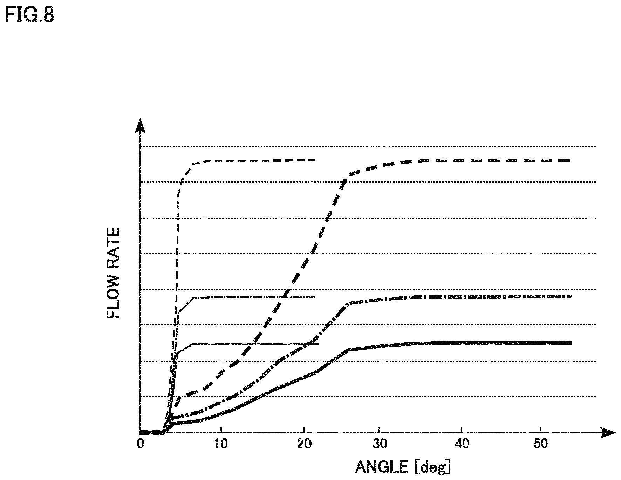

FIG. 8 is a graph showing the relation between the angle of the valve element 20 and the refrigerant flow rate. Note that the "angle [deg]" is a clockwise angle from the fully-closed state illustrated in FIG. 6A. In the present embodiment, an angle of 42 degrees corresponds to the fully-open state. In FIG. 8, thick lines represent results of the present embodiment, and thin lines represent results of cases where no shield members are provided as comparative examples. The results depend on the pressure difference between the pressure upstream of the valve section and the pressure downstream of the valve section. Solid lines represent the results when the pressure difference is 0.1 MPaG, alternate long and short dashed lines represent the results when the pressure difference is 0.2 MPaG, and broken lines represent the results when the pressure difference is 0.5 MPaG.

As shown by the results of experiments in FIG. 8, the refrigerant flow rate is higher as the pressure difference is larger. In particular, the shield members 50 provided as in the present embodiment allow the change in the flow rate to be gradual relative to the change in the valve opening degree, which allows more sensitive control at minute opening degrees. This means that the present embodiment provides a butterfly valve that facilitates micro flow rate control and that is practical as an expansion valve.

As described above, in the present embodiment, the valve element 20 of the butterfly valve 10 includes the flow rate adjusting parts C1 and the seal parts S1. The flow rate adjusting parts C1 are used to adjust the minute opening degree, and the seal parts S1 are used to open and close the valve section. Since the flow rate adjusting parts C1 and the seal parts S1 are located at different positions from each other, the seal parts S1 can be separated from the slits 124 (variable openings) at a minute opening degree as illustrated in FIGS. 7A and 7B, which prevents or reduces damage on the seal parts S1. Specifically, at a minute opening degree, the opening areas of the slits 124 are small, and the flow rate of the refrigerant through and near the slits 124 is high. As a result, erosion (abrasion from fluid) would be likely to occur on the members near the slits 124. In this regard, according to the present embodiment, since the seal parts S1 are sufficiently separated from the slits 124 at a minute opening degree, erosion on the seal parts S1 is prevented or reduced. Furthermore, since sufficient spacings between the seal parts S1 and the surfaces 126 are provided while the seal parts S1 face the slits 124 in the process of turning of the valve element 20. Thus, wear due to sliding does not occur at the seal parts S1. As a result, degradation in the sealing performance while the valve is closed is prevented or reduced.

### [Example]

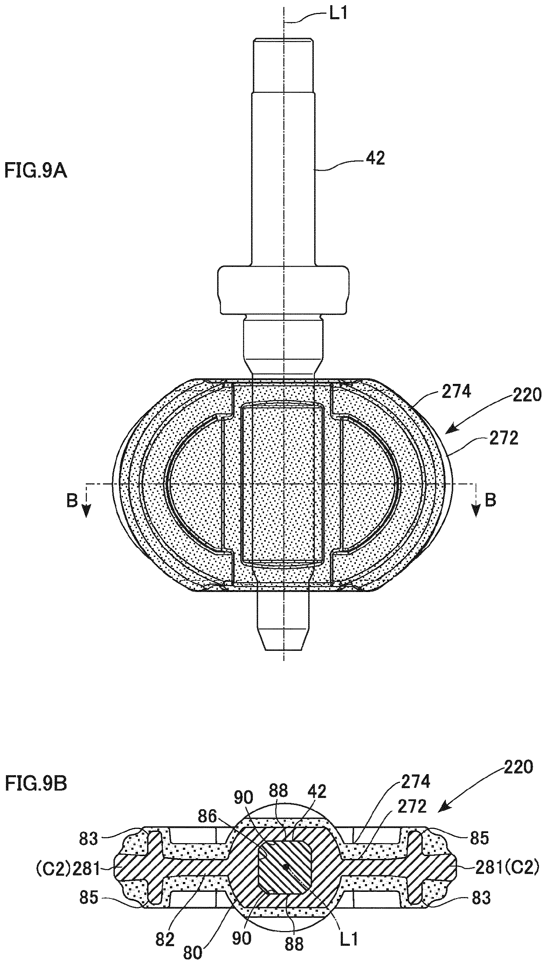

FIGS. 9A and 9B illustrate a valve element 220 and a structure around the valve element 220 according to an example, which is not part of the present invention. FIG. 9A is a front view illustrating a structure of connection between the valve element 220 and the shaft 42, and FIG. 9B is a cross-sectional view along arrows B-B in FIG. 9A. The following description will be focused on the differences from the first embodiment. Note that, in FIGS. 9A and 9B, components and parts that are substantially the same as those in the first embodiment will be represented by the same reference numerals.

In the present example, an elastic member 274 does not cover the entire outer surface of a plate 272, but ends of first support parts 281 are exposed at outer circumferential edges of a valve element 220. Thus, flow rate adjusting parts C2 are not constituted by beads but are metallic parts.

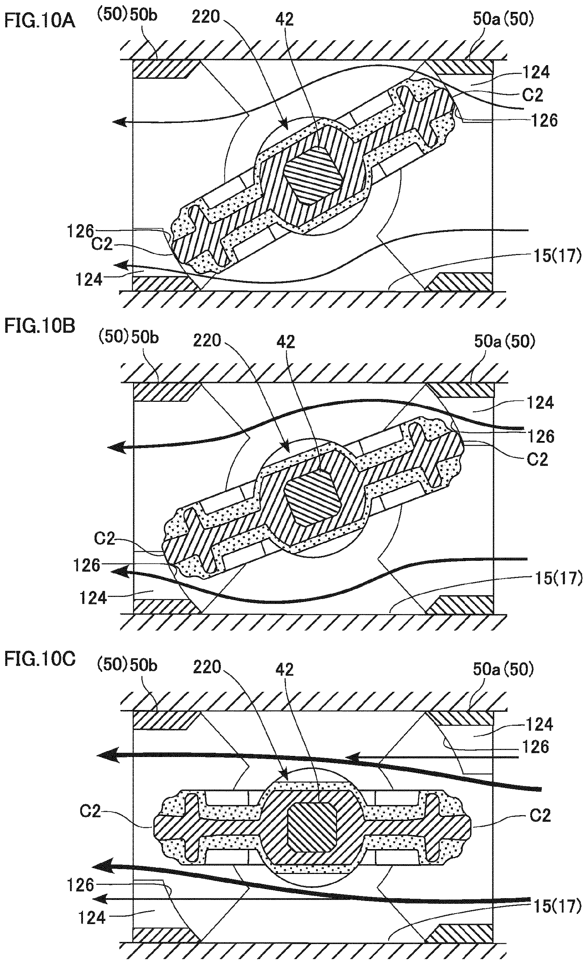

FIGS. 10A to 10C illustrate states of operation of the valve element 220 in valve open states. FIGS. 10A and 10B illustrate flow rate controlling states, and FIG. 10C illustrates the fully open state.

The flow rate adjusting parts C2 are made of a metal material. Predetermined clearances are kept between the flow rate adjusting parts C2 and the surfaces 126 while the flow rate adjusting parts C2 face the slits 124 (variable openings). This prevents the flow rate adjusting parts C2 from wearing due to sliding against the shield members 50 while the valve element 220 turns.

Micro flow rate control is performed while the flow rate adjusting parts C2 face the slits 124. As the valve element 220 turns in the clockwise direction in the figures, the opening area of the valve section increases, which allows sensitive control at minute opening degrees. While the flow rate adjusting parts C2 are shifted facing the slits 124, the butterfly valve 10 functions as an expansion valve.

According to the present example, in addition to the advantageous effects of the first embodiment, wear of the flow rate adjusting parts C2 is prevented or reduced. This allows the control using minute opening degrees to be maintained with high accuracy for a long period of time.

### [Second Embodiment]

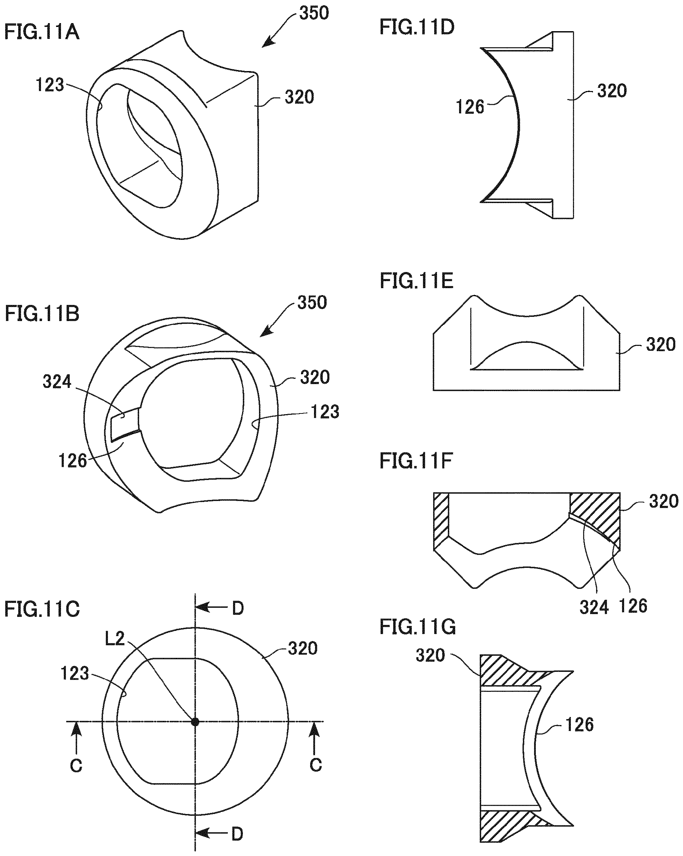

FIGS. 11A to 11G illustrate a structure of shield member 350 according to a second embodiment. FIG. 11A is a perspective view as viewed from the front, and FIG. 11B is a perspective view as viewed from the back. FIG. 11C is a front view, FIG. 11D is a left side view, and FIG. 11E is a plan view. FIG. 11F is a cross-sectional view along arrows C-C in FIG. 11C, and FIG. 11G is a cross-sectional view along arrows D-D in FIG. 11C.

As illustrated in FIGS. 11A and 11C, the shield member 350 of the present embodiment has no slit extending through a shield body 320 (which functions as a "shield wall") in the axial direction. As illustrated in FIGS. 11B and 11F, however, the surface 126 of the shield body 320 is partially cut out to form a recess 324 (recessed groove).

The recess 324 has a rectangular shape extending from an inner edge (protruding edge of the shield wall) of the shield body 320 (opening 123) to a position close to an outer edge of the shield body 320 along the turning direction of the valve element 20. The depth of the recess 324 is sufficiently small, and gradually increases from the outer edge side toward the inner edge of the shield body 320. In the present embodiment as well, since the distances between the flow rate adjusting parts C1 and the surfaces 126 are maintained at substantially zero, the opening area through which flow of the refrigerant is permitted varies depending on the turning angle of the valve element 20. Thus, the recess 324 functions as a "variable opening."

According to the present embodiment, the opening of the variable opening can be made smaller than that in the first embodiment. As a result, the flow rate control with the flow rate adjusting parts C2 can be performed at minuter opening degrees (in other words, the flow rate can be lowered), in addition to the advantageous effects of the first embodiment. This makes the butterfly valve more easily function as an expansion valve.

The description of the present invention given above is based upon certain embodiments. The embodiments are intended to be illustrative only and it will be obvious to those skilled in the art that various modifications could be further developed within the scope of the appended claims.

In each of the embodiments described above, a two-way valve that has an inlet port and an outlet port and that permits flow in one direction has been presented as a butterfly valve. In a modification, a bi-directional two-way valve having two ports whose functions can be switched between an inlet port and an outlet port may be provided.

In each of the embodiments described above, a two-way valve that has one inlet port and one outlet port has been presented as a butterfly valve. In a modification, a three-way valve or a four-way valve having an inlet port and an outlet and at least one more inlet port and/or outlet port may be provided. In this case, the first shield member and the second shield member need not necessarily be symmetric with respect to the axis of the valve element.

For example, in a case of a three-way valve, two passages may be arranged coaxially in the body to form a linear passage. Another passage may be connected perpendicularly to the linear passage to form a T-shaped passage. A valve element may be provided in the linear passage at the junction of the three passages. In addition, a first shield member may be positioned on one side of the valve element and a second shield member may be positioned on the other side of the valve element in the linear passage. The first shield member and the second shield member may be symmetric with respect to the axis of the passage perpendicular to the linear passage.

While the body 12 is made of metal in the embodiments described above, the body 12 may be made of plastic or other materials.

In the embodiments described above, the example in which the beads are provided to protrude from the elastic member covering the plate and function as seal parts and flow rate adjusting parts has been presented. In a modification, conversely, portions remaining on the surface of the elastic member of the valve element after the surface of the elastic member is cut out in a groove shape may constitute beads that function as seal parts and flow rate adjusting parts.

Alternatively, in an example not part of the present invention, no beads may be provided, and portions that function as seal parts and flow rate adjusting parts may be formed at different positions on the elastic member. The seal parts, however, preferably have a bead-like shape in terms of reducing the shut-off torque of the valve element. Furthermore, the flow rate adjusting parts preferably have a bead-like shape in terms of adjusting the opening area of the variable opening with high accuracy.

In the embodiments described above, the example structure in which the first and second shield members are members that are separate from the body and mounted on the body has been presented. In a modification, either of the shield members may be formed integrally with the body. In terms of increasing the versatility of the shield members and facilitating change in design, the shield members are preferably constituted by components separate from the body.

While the example in which the outer edge of the plate has a trifurcated shape has been presented in the embodiments described above, the outer edge of the plate may have a bifurcated shape or other shapes such that a narrow region is formed on a lower-pressure side of the seal center of each seal part.

In the embodiments described above, the structure in which the angle of the valve element with respect to the axis of the passage while the valve is closed is set to about 45 degrees and the valve element obliquely seals the passage has been presented. In a modification, other appropriate angles may be used for the angle of the valve element. The angle of the valve element may be 90 degrees, but is preferably smaller than 90 degrees. At the angle of 90 degrees, differential pressures act on the valve element in a self-opening direction on both sides of the shaft, which is disadvantageous in terms of stabilization of sealing performance. In contrast, at an angle smaller than 90 degrees, a differential pressure acts in a self-closing direction on one side of the shaft, which relatively stabilizes the sealing performance. Furthermore, since the seal part on the self-closing side has a stopper function stopping the turning of the valve element, the seal part itself can be made smaller. This reduces the squeeze rate of the seal part, and may reduce the shut-off torque.

Although not mentioned in the embodiments and modifications above, a structure in which the shaft does not extend through the valve element may be used. Specifically, in the structure illustrated in FIGS. 1A and 1B, a leading end of the shaft 42 may be positioned inside the valve element 20. In this case, the shaft support hole 40 can be omitted.

In the first embodiment and the example described above, the example structure in which variable openings are constituted by cutouts formed in the protruding edges of the shield wall along the turning direction of the valve element (see FIGS. 4A to 4G) has been presented. In a modification, the variable openings may be constituted by cutouts (variable holes) that are not open at the protruding edges of the shield wall but extend through the shield wall in the axial direction. The variable holes may have a cross-sectional shape extending in the turning direction of the valve element in the shield wall (a triangular shape in cross section, for example) to function as "variable openings."

In the second embodiment described above, the example structure in which the variable openings are constituted by recesses (recessed grooves or cutouts) formed on the surfaces of the shield wall facing the valve element and the recesses are open at the protruding edges of the shield wall has been presented (see FIGS. 11A to 11G). In a modification, the recesses may extend in the turning direction of the valve element but not be open at the protruding edges. The recesses may have a depth in the shield wall that changes in the turning direction of the valve element to effectively function as "variable openings." In this case, the recesses may have such a depth that increases or decreases toward the protruding edges within the ranges in which the recesses extend. When the flow rate adjusting parts of the valve element reach the recesses, the fluid flows around the outer circumferences of the flow rate adjusting parts through the gaps between the flow rate adjusting parts and the recesses.

In the embodiments described above, the examples in which the butterfly valve is applied to a refrigeration cycle of an automotive air conditioner have been presented. In a modification, the butterfly valve may be applied to a refrigeration cycle of a home air conditioner or other air conditioners. Alternatively, the butterfly valve may be applied to a circulation circuit of an automotive coolant (cooling water or cooling oil) for cooling a battery or a motor, or the like. In other words, the butterfly valve may be applied to a fluid circuit of an automotive fluid control system. Alternatively, the butterfly valve may be applied to a water circuit of a water heater or the like. Still alternatively, the butterfly valve may be applied to a device for controlling flow of working fluid such as oil.

## Claims

1. A butterfly valve (10) that is motor-operated, comprising:
a body (12) having an inner wall defining a passage (15) for a fluid;
a shaft (42) rotatably supported by the body (12);
a valve element (20) disposed in the passage (15) in a state in which the valve element (20) is mounted on the shaft (42) such that the valve element (20) turns with the shaft (42) to adjust open and closed states or an opening degree of the passage (15), wherein the valve element (20) includes a metal plate (72) and an elastic member (74) covering an outer surface of the plate (72), and has a symmetric structure with respect to an axis (L1) of the valve element (20);
an actuator (14) for driving the shaft (42) to rotate when power is supplied;
a shield member (50) that is mounted on the body (12) such that the shield member (50) is inserted in the passage (15) to partially block flow of the fluid through the passage (15), wherein the shield member (50) includes a shield wall (120, 320) that protrudes from an inner wall of the body (12) and has a surface (126) having a shape following a turning trajectory of an outer edge of the valve element (20); and
a variable opening (124, 324) constituted by a cutout formed on the shield wall (120, 320) in a turning direction of the valve element (20), an opening area of the variable opening (124, 324), through which flow of the fluid is permitted, varying depending on a turning angle of the valve element (20),
wherein the valve element (20) includes a flow rate adjusting part (C1)
that is shifted along the surface (126) of the shield wall (120, 320) to change the opening area of the variable opening (124, 324), and a seal part (S1) made of an elastic material that touches and leaves the inner wall of the body (12) to close and open the passage (15), the flow rate adjusting part (C1) and the seal part (S1) being located at different positions from each other,
wherein the elastic member (74) comprises a plurality of beads (100 to 106) each having an arc shape along the outer circumferential surface of the elastic member (74) and being formed to protrude from the outer circumferential surface, wherein first, second and third beads (100, 101, 102) are formed on one side of the valve element (20) with respect to the axis (L1), and fourth, fifth and sixth beads (104, 105, 106) are formed on the other side of the valve element (20) with respect to the axis (L1), wherein the third and fourth beads (102, 104) function as the seal part (S1), wherein when the valve element (20) turns in one direction, third and fourth beads (102, 104) come into contact with the inner wall (17) to close the passage (15), wherein second and fifth beads (101, 105) are arranged along the outermost circumference of the valve element (20) and function as flow rate adjusting parts (C1) that adjust a minute opening degree of the valve section.

2. The butterfly valve (10) according to claim 1, wherein the seal part (S1) is located at a position shifted from the outermost circumference of the valve element (20), and kept separated from the surface (126) of the shield wall (120, 320) within a turning range of the valve element (20).

3. The butterfly valve (10) according to any one of claims 1 to 2, wherein the variable opening (124, 324) has a shape with an opening width increasing toward a protruding edge of the shield wall (120, 320).

4. The butterfly valve (10) according to any of claims 1 to 3, wherein the shield member (50) includes a first shield member (50a) located upstream of the valve element (20) and a second shield member (50b) located downstream of the valve element (20) in the passage (15), and
wherein the first shield member (50a) and the second shield member (50b) are positioned to be symmetric with respect to an axis (L1) of the valve element (20).

5. The butterfly valve (10) according to any one of claims 1 to 4, installed in a refrigeration cycle and configurable to function as an expansion valve or an on-off valve depending on a turning position of the valve element (20), wherein, when the butterfly valve (10) is opened in configuration to function as the expansion valve, the turning position of the valve element (20) is adjusted so that the flow rate adjusting part (C1) adjusts the opening area of the variable opening (124, 324), and
wherein, when the butterfly valve (10) is opened in configuration to function as the on-off valve, the turning position of the valve element (20) is adjusted so that the flow rate adjusting part (C1) is separated from the variable opening (124, 324).

## Patentansprüche

1. Drosselventil (10), das motorbetrieben ist, das Folgendes umfasst:
einen Körper (12), der eine Innenwand aufweist, die einen Durchgang (15) für ein Fluid definiert;
eine Welle (42), die durch den Körper (12) rotierbar getragen wird;
ein Ventilelement (20), das in dem Durchgang (15) in einem Zustand angeordnet ist, in dem das Ventilelement (20) derart auf der Welle (42) montiert ist, dass sich das Ventilelement (20) mit der Welle (42) dreht, um sich einem offenen und einem geschlossenen Zustand oder einem Öffnungsgrad des Durchgangs (15) anzupassen, wobei das Ventilelement (20) eine Metallplatte (72) und ein elastisches Element (74), das eine Außenoberfläche der Platte (72) bedeckt, einschließt, und eine symmetrische Struktur hinsichtlich einer Achse (L1) des Ventilelements (20) aufweist;
einen Stellantrieb (14) zum Antreiben der Welle (42), um zu rotieren, wenn Strom zugeführt wird;
ein Abschirmelement (50), das an dem Körper (12) derart montiert ist, dass das Abschirmelement (50) in den Durchgang (15) eingeführt wird, um einen Durchfluss des Fluids durch den Durchgang (15) teilweise zu blockieren,
wobei das Abschirmelement (50) eine Abschirmwand (120, 320), die aus einer Innenwand des Körpers (12) herausragt und eine Oberfläche (126) aufweist, die eine Form aufweist, die einer Drehbahn einer Außenkante des Ventilelements (20) folgt, einschließt; und
eine variable Öffnung (124, 324), die durch einen Ausschnitt gebildet ist, der an der Abschirmwand (120, 320) in einer Drehrichtung des Ventilelements (20) ausgebildet ist, einen Öffnungsbereich der variablen Öffnung (124, 324), durch den der Durchfluss des Fluids zulässig ist, der in Abhängigkeit von einem Drehwinkel des Ventilelements (20) variiert, wobei das Ventilelement (20) ein Teil zum Anpassen der Durchflussmenge (C1) einschließt, der entlang der Oberfläche (126) der Abschirmwand (120, 320) verschoben wird, um den Öffnungsbereich der variablen Öffnung (124, 324) zu ändern, und ein Dichtungsteil (S1), das aus einem elastischen Material hergestellt ist, das die Innenwand des Körpers (12) berührt und verlässt, um den Durchgang (15) zu schließen und zu öffnen, wobei das Teil zum Anpassen der Durchflussmenge (C1) und das Dichtungsteil (S1) an unterschiedlichen Positionen voneinander gelegen sind, wobei das elastische Element (74) mehrere Sicken (100 bis 106) umfasst, die jeweils eine Bogenform entlang der äußeren Umfangsoberfläche des elastischen Elements (74) aufweisen und ausgebildet sind, um aus der äußeren Umfangsoberfläche herauszuragen, wobei eine erste, eine zweite und eine dritte Sicke (100, 101, 102) auf einer Seite des Ventilelements (20) hinsichtlich der Achse (L1) ausgebildet sind, und eine vierte, eine fünfte und eine sechste Sicke (104, 105, 106) auf der anderen Seite des Ventilelements (20) hinsichtlich der Achse (L1) ausgebildet sind, wobei die dritte und die vierte Sicke (102, 104) als das Dichtungsteil (S1) fungieren,
wobei wenn sich das Ventilelement (20) in einer Richtung dreht, die dritte und die vierte Sicke (102, 104) mit der Innenwand (17) in Berührung kommen, um den Durchgang (15) zu schließen, wobei die zweite und die fünfte Sicke (101, 105) entlang des äußersten Umfangs des Ventilelements (20) eingerichtet sind und als Teile zum Anpassen der Durchflussmenge (C1), die einen winzigen Öffnungsgrad des Ventilabschnitts anpassen, fungieren.

2. Drosselventil (10) nach Anspruch 1, wobei das Dichtungsteil (S1) an einer Position gelegen ist, die von dem äußersten Umfang des Ventilelements (20) verschoben und von der Oberfläche (126) der Abschirmwand (120, 320) innerhalb eines Drehbereichs des Ventilelements (20) getrennt gehalten wird.

3. Drosselventil (10) nach einem der Ansprüche 1 bis 2, wobei die variable Öffnung (124, 324) eine Form mit einer Öffnungsbreite aufweist, die zu einer herausragenden Kante der Abschirmwand (120, 320) hin zunimmt.

4. Drosselventil (10) nach einem der Ansprüche 1 bis 3, wobei das Abschirmelement (50) ein erstes Abschirmelement (50a), das stromaufwärts des Ventilelements (20) gelegen ist, und ein zweites Abschirmelement (50b), das stromabwärts des Ventilelements (20) in dem Durchgang (15) gelegen ist, einschließt, und wobei das erste Abschirmelement (50a) und das zweite Abschirmelement (50b) positioniert sind, um hinsichtlich einer Achse (L1) des Ventilelements (20) symmetrisch zu sein.

5. Drosselventil (10) nach einem der Ansprüche 1 bis 4, das in einem Kältekreislauf angebracht und konfigurierbar ist, um als ein Expansionsventil oder Schaltventil in Abhängigkeit von einer Drehposition des Ventilelements (20) zu fungieren, wobei, wenn das Drosselventil (10) in einer Konfiguration geöffnet wird, um als das Expansionsventil zu fungieren, die Drehposition des Ventilelements (20) so angepasst wird, dass das Teil zum Anpassen der Durchflussmenge (C1) den Öffnungsbereich der variablen Öffnung (124, 324) anpasst, und wobei, wenn das Drosselventil (10) in der Konfiguration geöffnet wird, um als das Schaltventil zu fungieren, die Drehposition des Ventilelements (20) so angepasst wird, dass das Teil zum Anpassen der Durchflussmenge (C1) von der variablen Öffnung (124, 324) getrennt ist.

## Revendications

1. Vanne papillon (10) à moteur, comprenant :
un corps (12) ayant une paroi interne définissant un passage (15) pour un fluide ;
un arbre (42) supporté en rotation par le corps (12) ;
un élément de vanne (20) disposé dans le passage (15) dans un état dans lequel l'élément de vanne (20) est monté sur l'arbre (42) de telle sorte que l'élément de vanne (20) tourne avec l'arbre (42) pour régler des états ouverts et fermés ou un degré d'ouverture du passage (15), l'élément de vanne (20) comportant une plaque métallique (72) et un élément élastique (74) recouvrant une surface extérieure de la plaque (72), et ayant une structure symétrique par rapport à un axe (L1) de l'élément de vanne (20) ;
un actionneur (14) pour entraîner l'arbre (42) en rotation lorsque de l'énergie est fournie ;
un élément de protection (50) qui est monté sur le corps (12) de telle sorte que l'élément de protection (50) est inséré dans le passage (15) pour bloquer partiellement un écoulement du fluide à travers le passage (15), l'élément de protection (50) comportant une paroi de protection (120, 320) qui fait saillie depuis une paroi intérieure du corps (12) et présentant une surface (126) ayant une forme suivant une trajectoire de braquage d'un bord extérieur de l'élément de vanne (20) ; et
une ouverture variable (124, 324) constituée par une découpe formée sur la paroi de protection (120, 320) dans une direction de braquage de l'élément de vanne (20), une zone d'ouverture de l'ouverture variable (124, 324), à travers laquelle l'écoulement du fluide est autorisé, variant en fonction d'un angle de braquage de l'élément de vanne (20), l'élément de vanne (20) comportant une partie de réglage de débit (C1) qui est déplacée le long de la surface (126) de la paroi de protection (120, 320) pour modifier la zone d'ouverture de l'ouverture variable (124, 324), et une partie d'étanchéité (S1) faite d'un matériau élastique qui touche et quitte la paroi intérieure du corps (12) pour fermer et ouvrir le passage (15), la partie de réglage du débit (C1) et la partie d'étanchéité (S1) étant situées à des positions différentes l'une de l'autre, l'élément élastique (74) comprenant une pluralité de bourrelets (100 à 106) ayant chacun une forme cintrée le long de la surface circonférentielle extérieure de l'élément élastique (74) et étant formés pour faire saillie de la surface circonférentielle extérieure, les premier, deuxième et troisième bourrelets (100, 101, 102) étant formés sur un côté de l'élément de vanne (20) par rapport à l'axe (L1), et les quatrième, cinquième et sixième bourrelets (104, 105, 106) étant formés de l'autre côté de l'élément de vanne (20) par rapport à l'axe (L1), les troisième et quatrième bourrelets (102, 104) fonctionnant comme la partie d'étanchéité (S1), lorsque l'élément de vanne (20) tourne dans une direction, les troisième et quatrième bourrelets (102, 104) venant en contact avec la paroi intérieure (17) pour fermer le passage (15), les deuxième et cinquième bourrelets (101, 105) étant disposés le long de la circonférence la plus à l'extérieure de l'élément de vanne (20) et fonctionnant comme des pièces de réglage du débit (C1) qui règlent un degré d'ouverture minime de la section de vanne.

2. Vanne papillon (10) selon la revendication 1, la partie d'étanchéité (S1) étant située à une position décalée de la circonférence la plus à l'extérieure de l'élément de vanne (20), et étant maintenue séparée de la surface (126) de la paroi de protection (120, 320) à l'intérieur d'une plage de braquage de l'élément de vanne (20).

3. Vanne papillon (10) selon l'une quelconque des revendications 1 à 2, l'ouverture variable (124, 324) ayant une forme dotée d'une largeur d'ouverture augmentant vers un bord en saillie de la paroi de protection (120, 320).

4. Vanne papillon (10) selon l'une quelconque des revendications 1 à 3, l'élément de protection (50) comportant un premier élément de protection (50a) situé en amont de l'élément de vanne (20) et un second élément de protection (50b) situé en aval de l'élément de vanne (20) dans le passage (15), et le premier élément de protection (50a) et le second élément de protection (50b) étant positionnés de manière à être symétriques par rapport à un axe (L1) de l'élément de vanne (20).

5. Vanne papillon (10) selon l'une quelconque des revendications 1 à 4, installée dans un cycle de réfrigération et configurable pour fonctionner comme un détendeur ou une vanne tout ou rien en fonction d'une position de braquage de l'élément de vanne (20), lorsque la vanne papillon (10) est ouverte en configuration pour fonctionner comme détendeur, la position de braquage de l'élément de vanne (20) étant réglée de sorte que la partie de réglage du débit (C1) règle la zone d'ouverture de l'ouverture variable (124, 324), et lorsque la vanne papillon (10) est ouverte en configuration pour fonctionner comme vanne tout ou rien, la position de braquage de l'élément de vanne (20) étant réglée de sorte que la partie de réglage de débit (C1) est séparé de l'ouverture variable (124, 324).
